# EUROPEAN PATENT APPLICATION

(11) **EP 3 093 830 A1**
(43) Date of publication of application: **16.11.2016**
(21) Application number: 16168732.2
(22) Date of filing: 09.05.2016
(51) Int. Cl.: G08G 1/0962, G06K 9/00

(54) **VEHICLE SPEED LIMIT DISPLAY DEVICE**

(30) Priority: 11.05.2015 JP 2015096794
(71) Applicant: Toyota Jidosha Kabushiki Kaisha, Toyota-shi, Aichi 471-8571 (JP)
(72) Inventor: FUJIMAKI, Yusuke, Toyota-shi, Aichi 471-8571 (JP)
(74) Representative: TBK

(57) **Abstract**

A speed limit display device for a vehicle includes: an indicator (13); an image obtaining device (11); and a processing portion (12) connected to the image obtaining device and the indicator, wherein the processing portion is configured to detect a speed limit indicated on a traffic sign in the captured landscape based on the image data, the processing portion is configured to display the detected speed limit on the indicator when an operating state of a switching portion is the state that makes the vehicle travel forward, and the processing portion is configured to stop the indicator from displaying the detected speed limit when the operating state of the switching portion is the state that makes the vehicle travel in reverse.

## Description

### BACKGROUND OF THE INVENTION

### 1. Field of the Invention

The invention relates to a vehicle speed limit display device that displays a speed limit indicated on a traffic sign to an occupant of a vehicle.

### 2. Description of Related Art

A traffic sign (a road sign) that displays information related to a speed limit for a vehicle traveling on a road is installed on the road. Document JP 2010-205160 A describes a speed limit display device for a vehicle, which displays a speed limit indicated on this traffic sign. This device recognizes a traffic sign in an image based on data of an image of the landscape in front of the vehicle that is captured by a camera mounted on the vehicle, and displays this recognized traffic sign on a display provided in a position visible by a driver of the vehicle.

For example, after a vehicle traveling on a road where the speed limit is 40 km/h passes a traffic sign indicating a speed limit of 60 km/h, and then temporarily stops and starts to travel in reverse (i.e., back up), and passes by the traffic sign indicating a speed limit of 60 km/h while traveling in reverse, the vehicle is traveling in reverse on a road where the speed limit is 40 km/h.

At this time, if "60 km/h" is displayed on an indicator because the traffic sign indicating a speed limit of 60 km/h was captured by the camera while the vehicle was traveling in reverse, the indicator will end up displaying the wrong speed limit. That is, even though a speed limit of 40 km/h is supposed to be displayed on the indicator, the speed limit of 60 km/h will end up being displayed on the indicator.

### SUMMARY OF THE INVENTION

It is an object of the present invention to provide a speed limit display device and method for a vehicle to reduce the likelihood of a wrong speed limit being displayed while a vehicle is traveling in reverse. It is a further object of the present invention to provide a speed limit display device and method for a vehicle to reduce the likelihood of a wrong speed limit being displayed while the vehicle starts to travel forward after traveling in reverse.

In order to achieve the above mentioned objects of the present invention, there is provided a speed limit display device as defined in claim 1. Further, there is provided a speed limit display method as defined in claim 5. Further aspects and features of the present invention are defined in the dependent claims.

One aspect of the invention relates to a speed limit display device and method for a vehicle. This speed limit display device includes an indicator configured to display information related to a speed limit of a road on which the vehicle is traveling, the indicator mounted in the vehicle provided with switching portion configured to switch between a state that makes the vehicle travel forward and a state that makes the vehicle travel in reverse; an image obtaining device configured to capture an image of a landscape in front of the vehicle and obtain image data of the landscape; and a processing portion connected to the image obtaining device and the indicator. The processing portion is configured to detect a speed limit indicated on a traffic sign in the landscape, based on the image data. The processing portion is also configured to display the speed limit on the indicator when an operating state of the switching portion is the state that makes the vehicle travel forward, and stop the indicator from displaying the speed limit when the operating state of the switching portion is the state that makes the vehicle travel in reverse.

Accordingly, when the vehicle is traveling in reverse, the speed limit display device does not display the speed limit. Therefore, the likelihood of a wrong speed limit being displayed by the speed limit display device while the vehicle is traveling in reverse is able to be reduced.

When the vehicle travels forward after having traveled in reverse, and the speed limit was not detected while the vehicle was traveling in reverse, it is highly likely that the speed limit that will be applied to the vehicle at the point when the vehicle starts to travel forward is the speed limit that was applied to the vehicle at the point when the vehicle started to travel in reverse.

Therefore, when the processing portion includes a storage element that stores the speed limit, the processing portion may be configured to, each time the speed limit is newly detected, replace the speed limit stored in the storage element with a newly detected speed limit and store the newly detected speed limit in the storage element. In this case, the processing portion may be configured to display the speed limit stored in the storage element on the indicator when the speed limit is not newly detected while the operating state of the switching portion is the state that makes the vehicle travel in reverse, and the operating state of the switching portion is then switched from the state that makes the vehicle travel in reverse to the state that makes the vehicle travel forward.

Accordingly, it is more likely that the appropriate speed limit is able to be displayed on the speed limit display device at the point when the vehicle starts to travel forward after traveling in reverse.

On the other hand, when the vehicle passes by a traffic sign while traveling is reverse and then the speed limit is detected, it is highly likely that the speed limit stored in the storage element is not the speed limit that should be applied to the vehicle after the vehicle passes by the traffic sign while traveling in reverse.

Therefore, the processing portion may be configured to not display the speed limit stored in the storage element on the indicator when the speed limit is newly detected while the operating state of the switching portion is the state that makes the vehicle travel in reverse, even when the operating state of the switching portion then switches from the state that makes the vehicle travel in reverse to the state that makes the vehicle travel forward.

Accordingly, in a case in which the vehicle travels forward after passing by the traffic sign while traveling in reverse, the likelihood that a wrong speed limit will be displayed on the speed limit display device is able to be reduced.

Other objects, characteristics and accompanying advantages of the invention should be easily understood from the description of the example embodiments of the invention with reference to the drawings described below.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a block diagram schematically showing a speed limit display device for a vehicle according to an example embodiment of the invention;
FIG. 2 is a view of an image (a captured image) captured by a camera shown in FIG. 1;
FIG. 3A is a view of a standard traffic sign;
FIG. 3B is a view of a traffic sign with a supplemental sign;
FIG. 4 is a flowchart illustrating a routine executed by a processing portion (CPU) shown in FIG. 1;
FIG. 5 is a flowchart illustrating another routine executed by the processing portion (CPU) shown in FIG. 1;
FIG. 6 is a flowchart illustrating another routine executed by the processing portion (CPU) shown in FIG. 1;
FIG. 7 is a flowchart illustrating another routine executed by the processing portion (CPU) shown in FIG. 1;
FIG. 8 is a flowchart illustrating another routine executed by the processing portion (CPU) shown in FIG. 1;
FIG. 9 is a view illustrating speed limit displays by the speed limit display device shown in FIG. 1 and the like;
FIG. 10 is another view illustrating speed limit displays by the speed limit display device shown in FIG. 1 and the like;
FIG. 11 is another view illustrating speed limit displays by the speed limit display device shown in FIG. 1 and the like;
FIG. 12 is another view illustrating speed limit displays by the speed limit display device shown in FIG. 1 and the like;
FIG. 13 is another view illustrating speed limit displays by the speed limit display device shown in FIG. 1 and the like; and
FIG. 14 is a flowchart illustrating a routine executed by the processing portion (CPU) shown in FIG. 1.

### DETAILED DESCRIPTION OF EMBODIMENTS

Hereinafter, a speed limit display device according to example embodiments of the invention will be described with reference to the accompanying drawings.

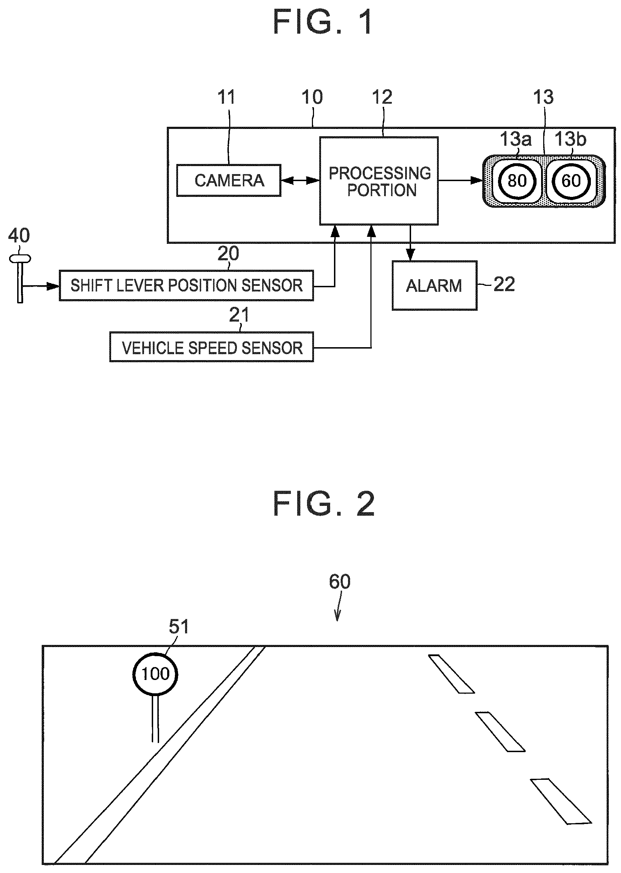

FIG. 1 is a block diagram schematically showing a speed limit display device (hereinafter, simply referred to as "execution device") 10 according to an example embodiment of the invention. The execution device 10 is mounted in a vehicle (an automobile, a vehicle). The execution device 10 includes a camera (an image obtaining device) 11, a processing portion 12, and a display (an indicator) 13.

The camera 11 is fixed to a stay or the like of an inner rearview mirror (a so-called room mirror) of a vehicle body front portion. An optical axis of the camera 11 is aligned with a vehicle body front-rear direction (vehicle advancing direction) when the camera 11 is fixed to the vehicle body. Therefore, the camera 11 is able to obtain an image (image data) 60 of the landscape in the vehicle advancing direction (in front of the vehicle) by capturing the landscape, as shown in FIG. 2. Upon receiving a capture command from the processing portion 12, the camera 11 captures an image of the landscape in front of the vehicle. The camera 11 is a CCD camera, for example.

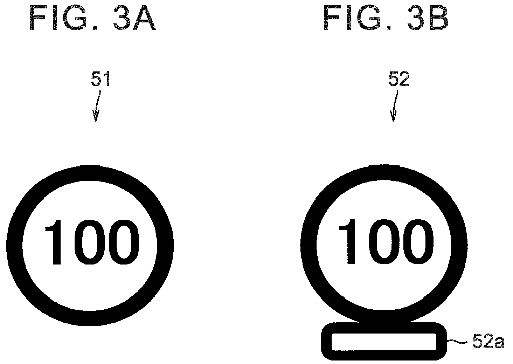

Traffic signs 51 and 52 and the like indicating a maximum speed limit (hereinafter, simply referred to as "speed limit") for a vehicle shown in FIG. 3 are installed near the road (on the side of the road or above the road or the like). The traffic sign 51 shown in FIG. 3A is a traffic sign (a standard traffic sign) without a supplemental sign that indicates a condition under which a speed limit (a standard speed limit) indicated on the traffic sign 51 applies. On the other hand, the traffic sign 52 shown in FIG. 3B is a traffic sign with a supplemental sign 52a (a traffic sign with a supplemental sign, a supplemented sign) that indicates a condition under which a speed limit (a supplemental speed limit) indicated on the traffic sign 52 applies. The condition under which the speed limit applies here includes, for example, conditions regarding the weather, class of vehicle, and time of day or night and the like.

The processing portion 12 is an electronic control unit (ECU) that includes a well-known microcomputer that includes RAM (a storage element), ROM, and a CPU and the like. The processing portion 12 is configured to detect (recognize) the traffic sign 51 or 52 by processing the image 60 (image data, captured image, or image signal) obtained by the camera 11, as will be described in detail later.

Furthermore, when the standard traffic sign 51 is detected in the captured image 60, the processing portion 12 detects (recognizes) a speed limit indicated on the detected standard traffic sign 51 as a standard speed limit Vst_new, and determines whether to display this detected standard speed limit Vst_new on the display 13, as will be described in detail later. Moreover, when the traffic sign 52 with a supplemental sign is detected in the captured image 60 as well, the processing portion 12 detects (recognizes) a speed limit indicated on the detected traffic sign 52 with a supplemental sign as a supplemental speed limit Vsub_new, and determines whether to display this detected supplemental speed limit Vsub_new on the display 13, as will be described in detail later.

The display 13 is provided in a position visible from a driver's seat of the vehicle (such as in a meter cluster panel, for example). As shown in FIG. 1, the display 13 includes a first display portion 13a that displays a main speed limit (the standard speed limit), and a second display portion 13b that displays a supplementary speed limit (the supplemental speed limit). The display portions 13a and 13b display the standard speed limit and the supplemental speed limit, respectively, according to a display command of the processing portion 12.

A shift lever position sensor 20 is configured to detect a set position of a shift lever (switching means) 40 operated by a driver of the vehicle in order to switch between forward running and reverse running of the vehicle, and output a signal indicative of this set position. The signal output from the shift lever position sensor 20 is input to (i.e., received by) the processing portion 12. The processing portion 12 obtains the set position of the shift lever 40 based on this input signal.

A vehicle speed sensor 21 is configured to detect a speed of the vehicle (a vehicle speed), and output a signal indicative of this vehicle speed SPD. The signal output from the vehicle speed sensor 21 is input to the processing portion 12. The processing portion 12 obtains the vehicle speed SPD based on this input signal.

An alarm 22 issues a warning by a sound in response to a command from the processing portion 12.

Next, the operation of the execution device 10 structured as described above will be described. In actuality, this operation is realized by a CPU provided in the processing portion 12 of the execution device 10 (hereinafter, simply referred to as "CPU") executing steps described next according to programs (instructions) stored in the ROM.

In this example, when an ignition switch is turned on, data Vst of the standard speed limit and data Vsub of the supplemental speed limit are erased from the RAM. That is, data indicating that the data Vst of the standard speed limit and the data Vsub of the supplemental speed limit are invalid is stored in a predetermined region of the RAM as the data Vst of the standard speed limit and the data Vsub of the supplemental speed limit.

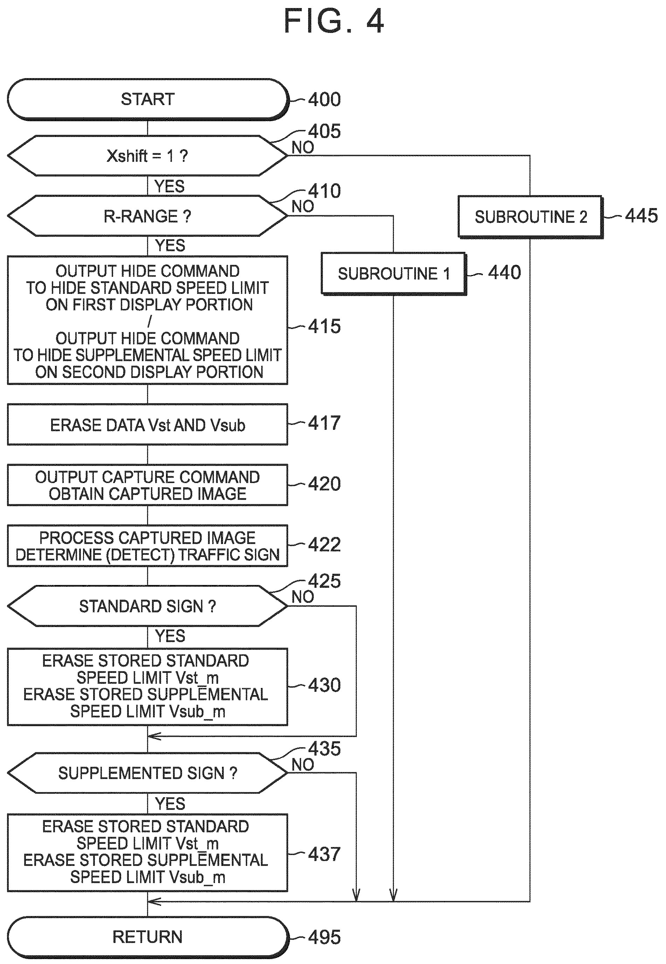

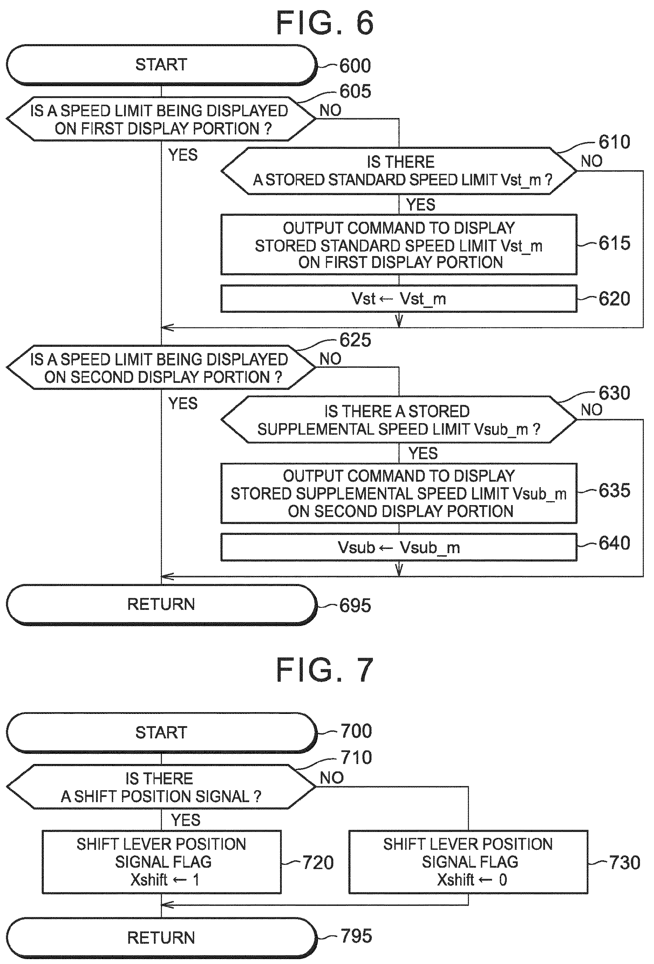

The CPU is configured to repeatedly execute the steps in the routine shown by the flowchart in FIG. 4 each time a predetermined period of time (e.g., 0.1 second) passes, when the ignition switch is on. Therefore, at a predetermined timing, the CPU starts processing from step 400 in FIG. 4, and proceeds on to step 405 where the CPU determines whether a value of a shift lever position signal flag Xshift is "1". This flag Xshift is a flag that indicates whether the processing portion 12 is receiving a signal related to the position of the shift lever 40 (i.e., a shift lever position signal) from the shift lever position sensor 20, and is set by the routine in FIG. 7 that is executed separately by the CPU.

That is, the CPU is configured to repeatedly execute the routine shown by the flowchart in FIG. 7 each time a predetermined period of time (e.g., 0.1 second) passes, when the ignition switch is on. Therefore, at a predetermined timing, the CPU starts processing from step 700 in FIG. 7, and proceeds on to step 710 where the CPU determines whether the processing portion 12 is receiving the shift lever position signal from the shift lever position sensor 20.

If the processing portion 12 is receiving the shift lever position signal, the CPU makes a determination of "Yes" in step 710 and proceeds on to step 720, where the CPU sets the value of the shift lever position signal flag Xshift to "1". Then, the CPU proceeds on to step 795 where this cycle of the routine ends.

On the other hand, if the processing portion 12 is not receiving a shift lever position signal, the CPU makes a determination of "No" in step 710 and proceeds on to step 730, where the CPU sets the value of the shift lever position signal flag Xshift to "0". Then, the CPU proceeds on to step 795 where this cycle of the routine ends.

Returning now to the description of the routine in FIG. 4, when the value of the shift lever position signal flag Xshift set as described above is "1" at the time the CPU executes step 405, the CPU makes a determination of "Yes" in step 405 and proceeds on to step 410.

Upon proceeding to step 410, the CPU determines whether the current set position of the shift lever 40 is a reverse position (in a state that makes the vehicle travel in reverse) (i.e., determines whether the shift lever is in an R-range), based on the shift lever position signal. The reverse position is a shift lever positon that is to be set when the vehicle is made to travel in reverse.

When the set position of the shift lever 40 is the reverse position at the time the CPU executes step 410, the CPU makes a determination of "Yes" in step 410, and performs steps 415 to 422 described below, in order.

Step 415: The CPU outputs a command (a hide command) to stop displaying both the standard speed limit on the first display portion 13a and the supplemental speed limit on the second display portion 13b. Therefore, if the standard speed limit is being displayed on the first display portion 13a, this standard speed limit stops being displayed, and if the standard speed limit is not being displayed on the first display portion 13a, the standard speed limit continues to not be displayed on the first display portion 13a. On the other hand, if the supplemental speed limit is being displayed on the second display portion 13b, this supplemental speed limit stops being displayed, and if the supplemental speed limit is not being displayed on the second display portion 13b, the supplemental speed limit continues to not be displayed on the second display portion 13b.

Step 417: The CPU erases the data Vst of the standard speed limit stored in the RAM as the standard speed limit displayed on the first display portion 13a, and erases the data Vsub of the supplemental speed limit stored in the RAM as the supplemental speed limit displayed on the second display portion 13b. That is, data indicating that the data of the standard speed limit Vst and the supplemental speed limit Vsub are invalid is stored in a predetermined region of the RAM as the data of the standard speed limit Vst and the supplemental speed limit Vsub.

Step 420: The CPU outputs a capture command to the camera 11 and obtains a captured image (image data) 60 captured by the camera 11.

Step 422: The CPU processes the captured image 60 obtained in step 420 by a well-known method (see JP 2010-205160 A, for example), and determines whether the traffic sign 51 and/or 52 indicating the speed limit is included in the captured image 60 based on the data of the processed captured image 60.

Next, the CPU proceeds on to step 425 where it determines whether the standard traffic sign 51 indicating the speed limit is included in the captured image 60, based on the determination result in step 422.

If the standard traffic sign 51 is included in the captured image 60, the CPU makes a determination of "Yes" in step 425 and proceeds on to step 430 where the CPU erases data (a stored standard speed limit) Vst_m related to the standard speed limit and data (a stored supplemental speed limit) Vsub_m related to the supplemental speed limit that are stored in the RAM. That is, data indicating that the data Vst_m and the data Vsub_m are invalid is stored in a predetermined region of the RAM as the data Vst_m and the data Vsub_m. Then, the CPU proceeds on to step 435.

In step 430, the CPU may also erase only the data Vst_m related to the standard speed limit, and not erase the data Vsub_m related to the supplemental speed limit.

On the other hand, if the standard traffic sign 51 is not included in the captured image 60, the CPU makes a determination of "No" in step 425 and proceeds directly on to step 435.

Upon proceeding to step 435, the CPU determines whether the traffic sign 52 with a supplemental sign indicating the speed limit is included in the captured image 60, based on the determination result in step 422.

If the traffic sign 52 with a supplemental sign is included in the captured image 60, the CPU makes a determination of "Yes" in step 435 and proceeds on to step 437 where the CPU erases the data Vst_m related to the standard speed limit and the data Vsub_m related to the supplemental speed limit that are stored in the RAM. That is, data indicating that the data Vst_m and the data Vsub_m are invalid is stored in a predetermined region of the RAM as the data Vst_m and the data Vsub_m. Then, the CPU proceeds on to step 495 where this cycle of the routine ends.

In step 437, the CPU may also erase only the data Vsub_m related to the supplemental speed limit, and not erase the data Vst_m related to the standard speed limit.

On the other hand, if the traffic sign 52 with a supplemental sign is not included in the captured image 60, the CPU makes a determination of "No" in step 435 and proceeds directly on to step 495 where this cycle of the routine ends.

Furthermore, if the set position of the shift lever 40 is not the reverse position (for example, if the set position of the shift lever 40 is a forward position (a state that makes the vehicle travel forward), a neutral position (a state in which power is not transmitted to driving wheels of the vehicle), or a park position (a state in which the vehicle is stopped such that wheels of the vehicle do not rotate)) at the point when the CPU executes step 410, the CPU makes a determination of "No" in step 410 and proceeds on to step 440.

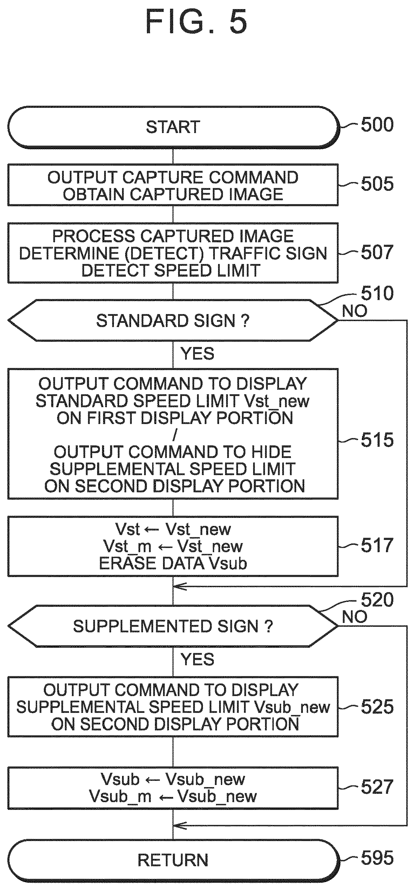

Upon proceeding to step 440, the CPU executes a routine (subroutine 1) indicated by the flowchart in FIG. 5. Therefore, upon proceeding to step 440, the CPU starts processing from step 500 in FIG. 5, and performs steps 505 and 507 described below, in order.

Step 505: The CPU outputs a capture command to the camera 11, directs the camera 11 to capture an image, and obtains the captured image 60 captured by the camera 11.

Step 507: The CPU processes the captured image 60 obtained in step 505 by a well-known method (see JP 2010-205160 A, for example), and determines whether the traffic sign 51 and/or 52 indicating the speed limit is included in the captured image 60 based on the data of the processed captured image 60. Furthermore, if it is determined that the standard traffic sign 51 is included in the captured image 60 (i.e., if the CPU recognizes (detects) the standard traffic sign 51 in the captured image 60), the CPU detects the speed limit indicated on the standard traffic sign 51 as a standard speed limit Vst_new. In addition, if it is determined that the traffic sign 52 with a supplemental sign is included in the captured image 60 (i.e., if the CPU recognizes (detects) the traffic sign 52 with a supplemental sign in the captured image 60), the CPU detects the speed limit indicated on the traffic sign 52 with a supplemental sign as a supplemental speed limit Vsub_new.

Next, the CPU proceeds on to step 510 where it determines whether the standard traffic sign 51 is included in the captured image 60, based on the determination result in step 507. If the standard traffic sign 51 is included in the captured image 60, the CPU makes a determination of "Yes" in step 510, and performs steps 515 and 517 described below, in order.

Step 515: The CPU outputs a command (a display command) to display the standard speed limit Vst_new newly detected in step 507 on the first display portion 13a, and outputs a command (a hide command) to stop displaying the supplemental speed limit on the second display portion 13b. As a result, the newly detected standard speed limit Vst_new is displayed on the first display portion 13 a, and the supplemental speed limit stops being displayed on the second display portion 13b.

Step 517: The CPU stores the standard speed limit Vst_new newly detected in step 507 in the RAM as the data Vst of the standard speed limit being displayed on the first display portion 13a, and also stores this standard speed limit Vst_new in the RAM as the data Vst_m of the standard speed limit to be displayed on the first display portion 13a. Furthermore, the CPU erases the data Vsub of the supplemental speed limit being displayed on the second display portion 13b that is stored in the RAM. That is, data indicating that data Vsub is invalid is stored in the RAM as the data Vsub. Then, the CPU proceeds on to step 520.

On the other hand, if the standard traffic sign 51 is not included in the captured image 60, the CPU makes a determination of "No" in step 510 and proceeds directly on to step 520. In this case, the display of the standard speed limit on the first display portion 13a is not changed, and the current display on the first display portion 13a is continued.

Upon proceeding to step 520, the CPU determines whether the traffic sign 52 with a supplemental sign is included in the captured image 60, based on the determination result in step 507. If the traffic sign 52 with a supplemental sign is included in the captured image 60, the CPU makes a determination of "Yes" in step 520 and performs steps 525 and 527 described below, in order.

Step 525: The CPU outputs a command (a display command) to display the supplemental speed limit Vsub_new newly detected in step 507 on the second display portion 13b. Consequently, the newly detected supplemental speed limit Vsub_new is displayed on the second display portion 13b.

Step 527: The CPU stores the supplemental speed limit Vsub_new newly detected in step 507 in the RAM as the data Vsub of the supplemental speed limit being displayed on the second display portion 13b, and also stores this supplemental speed limit Vsub_new in the RAM as the data Vsub_m of the supplemental speed limit to be displayed on the second display portion 13b. Then, the CPU returns to the routine in FIG. 4 via step 595.

On the other hand, if the traffic sign 52 with a supplemental sign is not included in the captured image 60, the CPU makes a determination of "No" in step 520 and proceeds directly on to step 595 where it returns to the routine in FIG. 4. In this case, the display of the supplemental speed limit on the second display portion 13b is not changed, and the current display on the second display portion 13b is continued.

Returning now to the description of FIG. 4, if the value of the shift lever position signal flag Xshift is "0" (i.e., if the shift lever position signal is not being received due to the processing portion 12 malfunctioning or the like) at the point when the CPU executes step 405, the CPU makes a determination of "No" in step 405 and proceeds on to step 445.

Upon proceeding to step 445, the CPU executes a routine (subroutine 2) illustrated by the flowchart in FIG. 6. Therefore, upon proceeding to step 445, the CPU starts processing from step 600 in FIG. 6, and proceeds on to step 605 where the CPU determines whether the standard speed limit is being displayed on the first display portion 13a.

If the standard speed limit is not being displayed on the first display portion 13a at the point when the CPU executes step 605, the CPU makes a determination of "No" in step 605 and proceeds on to step 610 where the CPU determines whether the data Vst_m of the standard speed limit is stored in the RAM.

If the data Vst_m of the standard speed limit is stored in the RAM at the point when the CPU executes step 610, the CPU makes a determination of "Yes" in step 610 and performs steps 615 and 620 described below, in order.

Step 615: The CPU outputs a command (a display command) to display the standard speed limit corresponding to the data Vst_m stored in the RAM on the first display portion 13a. Consequently, the standard speed limit corresponding to the data Vst_m is displayed on the first display portion 13a.

Step 620: The CPU stores the standard speed limit corresponding to the data Vst_m that is stored in the RAM, in the RAM as the data Vst of the standard speed limit that is displayed on the first display portion 13a. Then, the CPU proceeds on to step 625.

In contrast, if the data Vst_m of the standard speed limit is not stored in the RAM at the time when the CPU executes step 610, the CPU makes a determination of "No" in step 610 and proceeds directly on to step 625. In this case, the state in which the standard speed limit is not displayed on the first display portion 13a continues.

If the standard speed limit is being displayed on the first display portion 13a at the time when the CPU executes step 605, the CPU makes a determination of "Yes" in step 605 and proceeds directly on to step 625. In this case, the display of the standard speed limit on the first display portion 13a is not changed, and the current display on the first display portion 13a is continued.

Upon proceeding to step 625, the CPU determines whether the supplemental speed limit is being displayed on the second display portion 13b.

If the supplemental speed limit is not being displayed on the second display portion 13b at the time when the CPU executes step 625, the CPU makes a determination of "No" in step 625 and proceeds on to step 630 where the CPU determines whether the data Vsub_m of the supplemental speed limit is stored in the RAM.

If the data Vsub_m of the supplemental speed limit is stored in the RAM at the time when the CPU executes step 630, the CPU makes a determination of "Yes" in step 630, and executes steps 635 and 640 described below, in order.

Step 635: The CPU outputs a command (a display command) to display the supplemental speed limit corresponding to the data Vsub_m that is stored in the RAM, on the second display portion 13b. Consequently, the supplemental speed limit corresponding to the data Vsub_m is displayed on the second display portion 13b.

Step 640: The CPU stores the supplemental speed limit corresponding to the data Vsub_m that is stored in the RAM, in the RAM as the data Vsub of the supplemental speed limit that is being displayed on the second display portion 13b. Then, the CPU returns to the routine in FIG. 4 via step 695.

In contrast, if the data Vsub_m of the supplemental speed limit is not stored in the RAM at the time when the CPU executes step 630, the CPU makes a determination of "No" in step 630 and proceeds directly on to step 695 where it returns to the routine in FIG. 4. In this case, the state in which the supplemental speed limit is not being displayed on the second display portion 13b continues.

If the supplemental speed limit is being displayed on the second display portion 13b at the time when the CPU executes step 625, the CPU makes a determination of "Yes" in step 625 and proceeds directly on to step 695 where it returns to the routine in FIG. 4. In this case, the display of the supplemental speed limit on the second display portion 13b is not changed, and the current display on the second display portion 13b is continued.

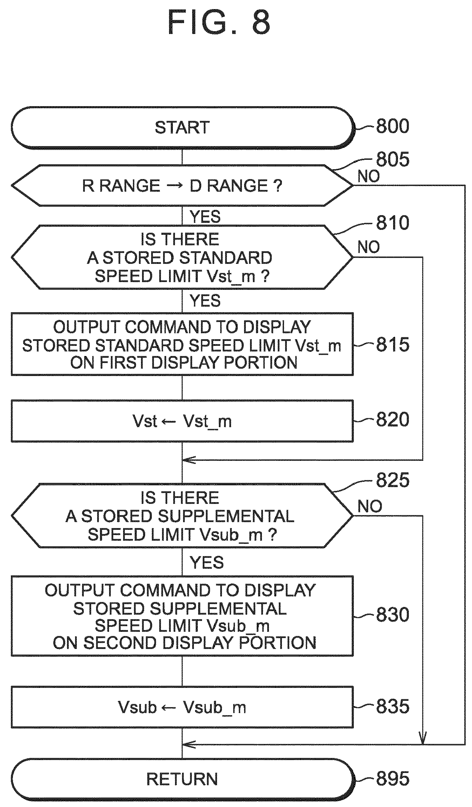

Moreover, the CPU is configured to repeatedly execute the steps in the routine shown by the flowchart in FIG. 8 each time a predetermined period of time (e.g., 0.1 second) passes, when the ignition switch is on. Therefore, at a predetermined timing, the CPU starts processing from step 800 in FIG. 8, and proceeds on to step 805 where the CPU determines whether the time when the CPU executes step 805 is a time immediately after the set position of the shift lever 40 has switched from the reverse position to the forward position.

If the time when the CPU executes step 805 is not a time immediately after the set position of the shift lever 40 has switched from the reverse position to the forward position, the CPU make a determination of "No" in step 805 and proceeds directly on to step 895 where this cycle of the routine ends.

On the other hand, if the time when the CPU executes step 805 is a time immediately after the set position of the shift lever 40 has switched from the reverse position to the forward position, the CPU make a determination of "Yes" in step 805 and proceeds on to step 810.

At the point in time when the CPU had made the determination of "Yes" in step 805, the set position of the shift lever 40 had been set to the reverse position at a time prior to that time, so the speed limit is not displayed on either the first display portion 13a or the second display portion 13b (see step 415 in FIG. 4).

Upon proceeding to step 810, the CPU determines whether the data Vst_m of the standard speed limit is stored in the RAM.

If the data Vst_m of the standard speed limit is stored in the RAM at the time when the CPU executes step 810, the CPU makes a determination of "Yes" in step 810, and then performs steps 815 and 820 described below, in order.

Step 815: The CPU outputs a command (a display command) to display the standard speed limit corresponding to the data Vst_m stored in the RAM, on the first display portion 13a. Consequently, the standard speed limit corresponding to the data Vst_m is displayed on the first display portion 13a.

Step 820: The CPU stores the standard speed limit corresponding to the data Vst_m stored in the RAM, in the RAM as the data Vst of the standard speed limit that is being displayed on the first display portion 13a. Then, the CPU proceeds on to step 825.

On the other hand, if the data Vst_m of the standard speed limit is not stored in the RAM at the time when the CPU executes step 810, the CPU makes a determination of "No" in step 810 and proceeds directly on to step 825. In this case, the state in which the standard speed limit is not being displayed on the first display portion 13a continues.

Upon proceeding to step 825, the CPU determines whether the data Vsub_m of the supplemental speed limit is stored in the RAM.

If the data Vsub_m of the supplemental speed limit is stored in the RAM at the time when the CPU executes step 825, the CPU makes a determination of "Yes" in step 825, and performs steps 830 and 835 described below, in order.

S830: The CPU outputs a command (a display command) to display the supplemental speed limit corresponding to the data Vsub_m stored in the RAM, on the second display portion 13b. Consequently, the supplemental speed limit corresponding to the data Vsub_m is displayed on the second display portion 13b.

Step 835: The CPU stores the supplemental speed limit corresponding to the data Vsub_m stored in the RAM, in the RAM as the data Vsub of the supplemental speed limit being displayed on the second display portion 13b. Then, the CPU proceeds on to step 895 where this cycle of the routine ends.

On the other hand, if the data Vsub_m of the supplemental speed limit is not stored in the RAM at the time when the CPU executes step 825, the CPU makes a determination of "No" in step 825 and proceeds directly on to step 895 where this cycle of the routine ends. In this case, the state in which the supplemental speed limit is not being displayed on the second display portion 13b continues.

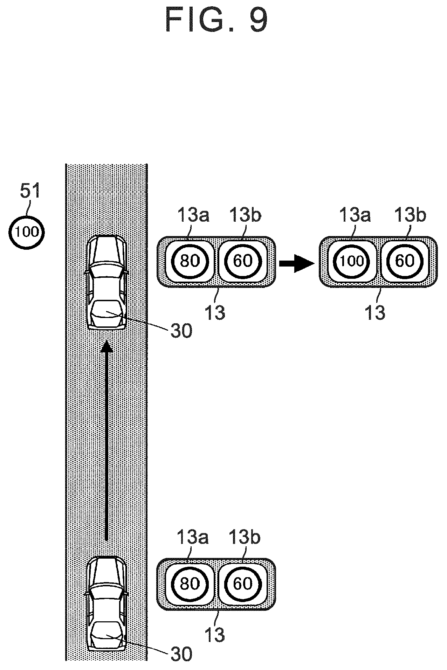

The operation of the execution device 10 is as described above. According to this execution device 10, when a vehicle 30 is traveling on a road under the circumstances shown in FIGS. 9 to 13, for example, the speed limit is displayed on the display 13 in the manner described below.

In the example shown in FIG. 9, a standard traffic sign 51 indicating a standard speed limit of 100 km/h is installed on the left side of the road. In this example, a case in which a standard speed limit of 80 km/h is displayed on the first display portion 13a and a supplemental speed limit of 60 km/h is displayed on the second display portion 13b when the vehicle 30 is traveling in front of the traffic sign 51, is assumed.

When the vehicle 30 advances and approaches the traffic sign 51, the camera 11 of the vehicle 30 captures an image of the landscape including this traffic sign 51. At this time, the execution device 10 recognizes (detects) the traffic sign 51, determines that this traffic sign 51 is a standard traffic sign, and detects the standard speed limit (= 100 km/h) indicated on the traffic sign 51.

Then, when the vehicle 30 passes by the traffic sign 51, the execution device 10 outputs a command to the display 13 to display the standard speed limit (= 100 km/h) indicated on the standard traffic sign 51, on the first display portion 13 a.

That is, the CPU makes a determination of "Yes" in step 405 in FIG. 4, makes a determination of "No" in step 410, makes a determination of "Yes" in step 510 in FIG. 5, and performs step 515. As a result, the standard speed limit displayed on the first display portion 13a switches from 80 km/h to 100 km/h.

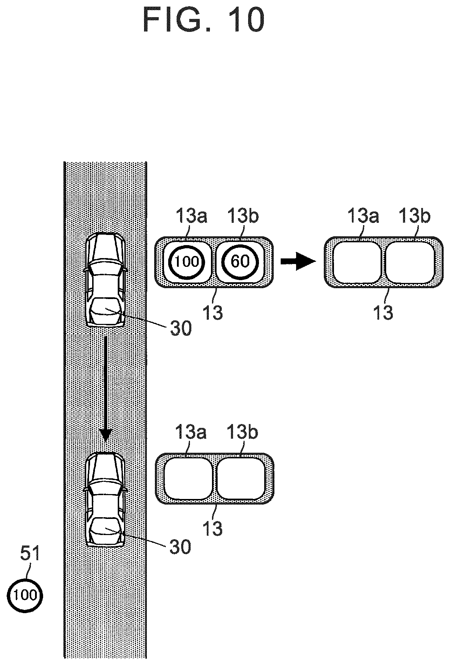

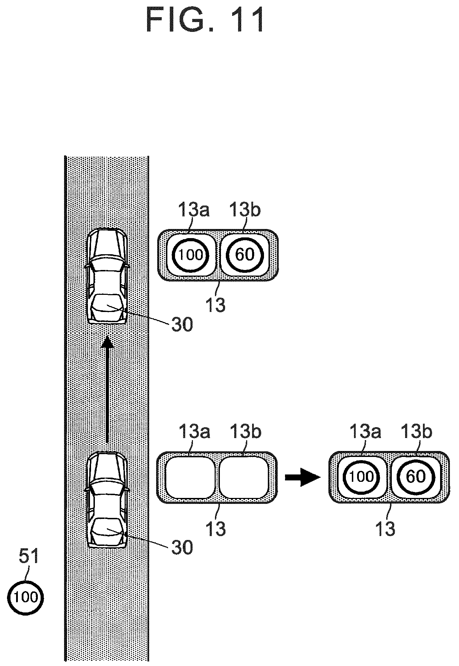

In the example shown in FIGS. 10 and 11 as well, a standard traffic sign 51 indicating a standard speed limit of 100 km/h is installed on the left side of the road. In this example, a case in which the vehicle 30 stops at a spot after passing the traffic sign 51 is assumed. It is also assumed that a standard speed limit of 100 km/h is displayed on the first display portion 13a and a supplemental speed limit of 60 km/h is displayed on the second display portion 13b at the point when the vehicle 30 stops at the spot after passing the traffic sign 51.

When the shift lever 40 of the vehicle 30 is set to the reverse position, the execution device 10 outputs a command to stop displaying the standard speed limit (= 100 km/h) on the first display portion 13a, as well as outputs a command to stop displaying the supplemental speed limit (= 60 km/h) on the second display portion 13b.

That is, the CPU makes a determination of "Yes" in steps 405 and 410 in FIG. 4, and performs step 415. As a result, both the standard speed limit on the first display portion 13a and the supplemental speed limit on the second display portion 13b stop being displayed, as shown in FIG. 10.

Then, while the vehicle 30 is traveling in reverse (i.e., backing up), neither the standard speed limit on the first display portion 13a nor the supplemental speed limit on the second display portion 13b are displayed. Then, when the vehicle 30 stops at a spot after passing the traffic sign 51 and the shift lever 40 of the vehicle 30 is set to the forward position, the execution device 10 outputs a command to display the standard speed limit (= 100 km/h) and the supplemental speed limit (= 60 km/h) on the first display portion 13a and the second display portion 13b, respectively, based on the data of the standard speed limit and the supplemental speed limit (i.e., the data of 100 km/h and 60 km/h, in this example) stored in the RAM.

That is, the CPU makes a determination of "Yes" in steps 805 and 810 in FIG. 8, and performs step 815. Moreover, the CPU makes a determination of "Yes" in step 825 and performs step 830. As a result, the standard speed limit of 100 km/h and the supplemental speed limit of 60 km/h are displayed on the first display portion 13a and the second display portion 13b, respectively, as shown in FIG. 11.

Then, while the vehicle 30 is traveling forward, the standard speed limit of 100 km/h continues to be displayed on the first display portion 13a, and the supplemental speed limit of 60 km/h continues to be displayed on the second display portion 13b.

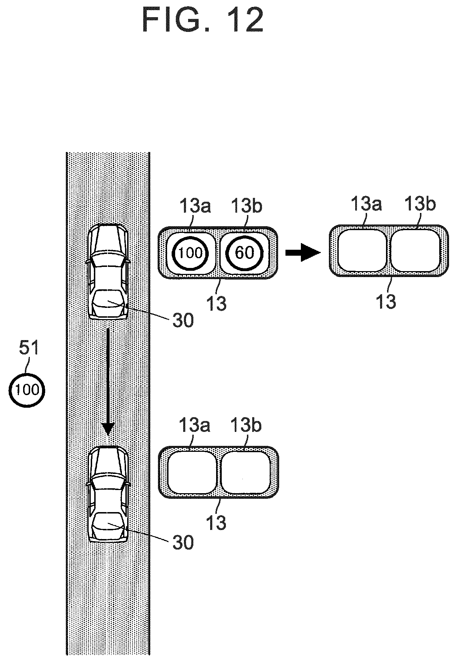

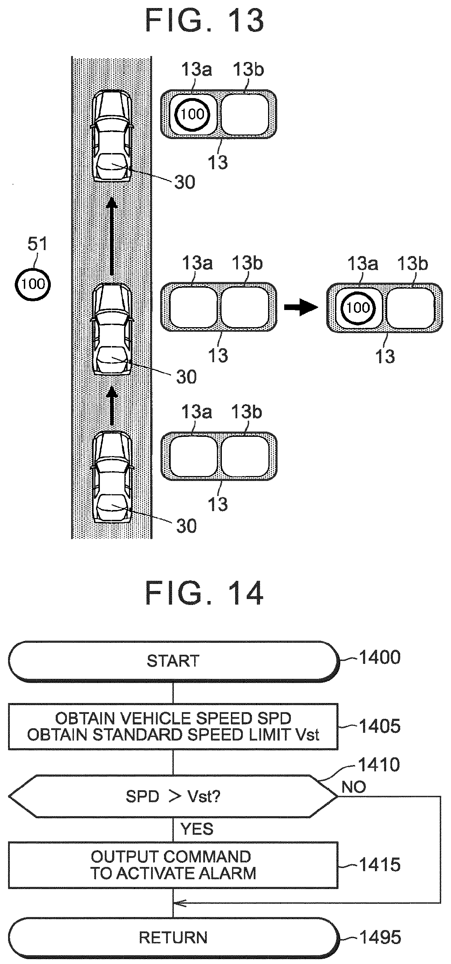

In the example shown in FIGS. 12 and 13 as well, a standard traffic sign 51 indicating a standard speed limit of 100 km/h is installed on the left side of the road. In this example, a case in which the vehicle 30 stops at a spot after passing the traffic sign 51 is assumed. It also is assumed that a standard speed limit of 100 km/h is displayed on the first display portion 13a and a supplemental speed limit of 60 km/h is displayed on the second display portion 13b at the point when the vehicle 30 stops at the spot after passing the traffic sign 51.

When the shift lever 40 of the vehicle 30 is set to the reverse position, the execution device 10 outputs a command to stop displaying both the standard speed limit (= 100 km/h) on the first display portion 13a and the supplemental speed limit (= 60 km/h) on the second display portion 13b.

That is, the CPU makes a determination of "Yes" in steps 405 and 410 in FIG. 4, and performs 415. As a result, both the standard speed limit on the first display portion 13a and the supplemental speed limit on the second display portion 13b stop being displayed, as shown in FIG. 12.

Then, while the vehicle 30 is traveling in reverse (i.e., backing up), neither the standard speed limit on the first display portion 13a nor the supplemental speed limit on the second display portion 13b are displayed. When the vehicle 30 backs up farther and soon passes by the traffic sign 51, the camera 11 on the vehicle 30 captures the landscape that includes the standard traffic sign 51. At this time, the execution device 10 erases the data related to the standard speed limit (i.e., the stored standard speed limit) Vst_m and the data related to the supplemental speed limit (i.e., the stored supplemental speed limit) Vsub_m that are stored in the RAM, from the RAM. More specifically, the execution device 10 erases the data of the 100 km/h for the first display portion 13a and the 60 km/h for the second display portion 13b from the RAM.

That is, the CPU makes a determination of "Yes" in step 425 in FIG. 4, and performs step 430.

Then, when the vehicle 30 stops and the shift lever 40 of the vehicle 30 is set to the forward position, neither the data related to the standard speed limit (i.e., the stored standard speed limit) Vst_m nor the data related to the supplemental speed limit (i.e., the stored supplemental speed limit) Vsub_m is stored in the RAM, so the state in which no speed limit is displayed on either the first display portion 13a or the second display portion 13b continues, as shown in FIG. 13.

That is, the CPU makes a determination of "Yes" in step 805 in FIG. 8, and makes a determination of "No" in step 810. Moreover, the CPU makes a determination of "No" in step 825.

Then, when the vehicle 30 advances and approaches the traffic sign 51, the landscape that includes the traffic sign 51 is captured by the camera 11, so the execution device 10 recognizes (detects) the traffic sign 51, and detects the standard speed limit (= 100 km/h) indicated on this traffic sign 51. Then, when the vehicle 30 passes by the traffic sign 51, the execution device 10 outputs a command to display the standard speed limit (= 100 km/h) on the first display portion 13 a.

That is, the CPU makes a determination of "Yes" in step 405 in FIG. 4, makes a determination of "No" in step 410, makes a determination of "Yes" in step 510 in FIG. 5, and performs step 515. As a result, the standard speed limit of 100 km/h is displayed on the first display portion 13a, as shown in FIG. 13.

The execution device 10 is configured to store the data of the speed limit in the RAM. However, the execution device 10 may also have memory (RAM) that stores the data of the speed limit provided in the camera 11, and be configured to store the data of the speed limit in the memory of the camera 11. In this case, the processing portion 12 is formed by the ECU and the memory of the camera 11.

Moreover, the CPU of the processing portion 12 is configured to repeatedly execute the routine shown by the flowchart in FIG. 14 each time a predetermined period of time (e.g., 0.1 second) passes, when the ignition switch is on. Therefore, at a predetermined timing, the CPU starts processing from step 1400 in FIG. 14 and proceeds on to step 1405 where the CPU obtains the vehicle speed SPD and the standard speed limit Vst being displayed on the first display portion 13a. The vehicle speed SPD is obtained based on a signal output from the vehicle speed sensor 21.

Next, the CPU proceeds on to step 1410 where it determines whether the vehicle speed SPD obtained in step 1405 is greater than the standard speed limit Vst obtained in step 1405.

If the vehicle speed SPD is higher than the standard speed limit Vst at the time when the CPU executes step 1410, the CPU makes a determination of "Yes" in step 1410 and proceeds on to step 1415 where the CPU outputs a command to activate the alarm 22. Then, the CPU proceeds on to step 1495 where this cycle of the routine ends.

On the other hand, if the vehicle speed SPD is equal to or lower than the standard speed limit Vst at the point when the CPU executes step 1410, the CPU makes a determination of "No" in step 1410 and proceeds directly on to step 1495 where this cycle of the routine ends.

According to the routine described above, when the vehicle speed SPD is higher than the standard speed limit Vst being displayed on the first display portion 13a, an audible alarm that notifies the driver that the vehicle speed SPD is higher than the standard speed limit Vst is issued by the alarm 22.

When the vehicle speed SPD is higher than the standard speed limit Vst being displayed on the first display portion 13a, the execution device 10 may also notify the driver that the vehicle speed SPD is higher than the standard speed limit Vst by indicating that the vehicle speed SPD is higher than the standard speed limit Vst on the display 13. That is, the invention may also be configured to notify the driver that the vehicle speed SPD is higher than the standard speed limit Vst by warning means that includes a sound or a display on the display 13.

As described above, the speed limit display device 10 according to this example embodiment of the invention is mounted in a vehicle provided with switching means (a shift lever) for switching between a state that makes the vehicle travel forward and a state that makes the vehicle travel in reverse, and a gear train, not shown.

The speed limit display device 10 includes the indicator (the display) 13, the image obtaining device (the camera) 11, and the processing portion 12 that is connected the image obtaining device 11 and the indicator 13.

The processing portion 12 detects the speed limit (the standard speed limit and/or the supplemental speed limit) indicated on a captured traffic sign (the standard traffic sign and/or the supplemental traffic sign) 51 and/or 52 that is a traffic sign in the landscape captured by the image obtaining device 11, based on the image data 60 obtained by the image obtaining device 11 (steps 505 and 507 in FIG. 5).

Then, when operating state of the switching means 40 is the state that makes the vehicle travel forward (i.e., when the determination in step 410 in FIG. 4 is "No" and the determination in step 510 in FIG. 5 is "Yes"), the processing portion 12 displays the detected speed limit Vst_new and/or Vsub_new on the display 13 (step 515 in FIG. 5). On the other hand, when the operating state of the switching means 40 is the state that makes the vehicle travel in reverse (i.e., when the determination in step 410 in FIG. 4 is "Yes"), the processing portion 12 stops the detected speed limit from being displayed by the display 13 (step 415 in FIG. 4).

Moreover, the processing portion 12 includes the storage element (the processing portion or the camera) 12 or 11 that stores the speed limit. Each time the speed limit is newly detected, the processing portion 12 replaces the speed limit (i.e., the data of the standard speed limit or the supplemental speed limit) Vst_m or Vsub_m stored in the storage element with the newly detected speed limit and stores it in the storage element 12 or 11 (step 517 in FIG. 5).

The processing portion 12 displays the speed limit Vst_m and/or Vsub_m stored in the storage element 12 and/or 11 on the indicator 13 (i.e., a determination of "Yes" in step 810 in FIG. 8, step 815 in FIG. 8) when the speed limit is not newly detected while the operating state of the switching means 40 is the state that makes the vehicle travel in reverse (i.e., a determination of "No" in step 425 in FIG. 4), and then the operating state of the shift lever 40 is switched from the state that makes the vehicle travel in reverse to the state that makes the vehicle travel forward (i.e., a determination of "Yes" in step 805 in FIG. 8).

Furthermore, the speed limit Vst_m and/or Vsub_m stored in the storage element 12 or 11 is not displayed on the display 13 (a determination of "No" in step 810 in FIG. 8) when a speed limit is newly detected while the operating state of the switching means 40 is the state that makes the vehicle travel in reverse (i.e., a determination of "Yes" in step 425 in FIG. 4), even when the operating state of the switching means 40 is then switched from the state that makes the vehicle travel in reverse to the state that makes the vehicle travel forward (i.e., a determination of "Yes" in step 805 in FIG. 8).

As a result, the likelihood of a wrong speed limit being displayed on the display 13 while the vehicle is traveling in reverse is able to be reduced.

The invention is not limited to the example embodiments described above. That is, various modified examples may also be employed within the scope of the invention. For example, the display 13 may include only the first display portion 13a. In this case, the outputting and processing of the signal to the second display portion 13b in the various routines is omitted.

Furthermore, the execution device 10 described above continues to display the standard speed limit on the first display portion 13a and display the supplemental speed limit on the second display portion 13b when the shift lever 40 is set to the neutral position. However, the execution device 10 may also be configured to stop displaying these speed limits on the first display portion 13a and the second display portion 13b when the shift lever 40 is set to the neutral position.

Similarly, the execution device 10 described above continues to display the standard speed limit on the first display portion 13a and display the supplemental speed limit on the second display portion 13b when the shift lever 40 is set to the park position. However, the execution device 10 may also be configured to stop displaying these speed limits on the first display portion 13a and the second display portion 13b when the shift lever 40 is set to the park position.

## Claims

1. A speed limit display device for a vehicle, **characterized by** comprising:
an indicator (13) configured to display information related to a speed limit of a road on which the vehicle is traveling, the indicator mounted in the vehicle provided with a switching portion (40) configured to switch between a state that makes the vehicle travel forward and a state that makes the vehicle travel in reverse;
an image obtaining device (11) configured to capture an image of a landscape in front of the vehicle and obtain image data of the landscape; and
a processing portion (12) connected to the image obtaining device and the indicator, wherein
the processing portion is configured to detect a speed limit indicated on a traffic sign in the landscape based on the image data,
the processing portion is configured to display the speed limit on the indicator when an operating state of the switching portion is the state that makes the vehicle travel forward, and
the processing portion is configured to stop the indicator from displaying the speed limit when the operating state of the switching portion is the state that makes the vehicle travel in reverse.

2. The speed limit display device according to claim 1, **characterized in that**
the processing portion includes a storage element that stores the speed limit, and
the processing portion is configured to, each time the speed limit is newly detected, replace the speed limit stored in the storage element with a newly detected speed limit and store the newly detected speed limit in the storage element, and
the processing portion is configured to display the speed limit stored in the storage element on the indicator when the speed limit is not newly detected while the operating state of the switching portion is the state that makes the vehicle travel in reverse, and the operating state of the switching portion is then switched from the state that makes the vehicle travel in reverse to the state that makes the vehicle travel forward.

3. The speed limit display device according to claim 2, **characterized in that**
the processing portion is configured to not display the speed limit stored in the storage element on the indicator, when the speed limit is newly detected while the operating state of the switching portion is the state that makes the vehicle travel in reverse, even when the operating state of the switching portion then switches from the state that makes the vehicle travel in reverse to the state that makes the vehicle travel forward.

4. The speed limit display device according to any one of claims 1 to 3, wherein
the indicator includes a first display portion for displaying information related to a speed limit indicated on a first traffic sign, and a second display portion for displaying information related to a speed limit indicated on a second traffic sign, the second traffic sign having a supplemental sign indicating a condition under which the speed limit indicated on the second traffic sign applies.

5. A speed limit display method for a vehicle having a speed limit display device comprising an indicator (13) configured to display information related to a speed limit of a road on which the vehicle is traveling, the indicator mounted in the vehicle provided with a switching portion (40) configured to switch between a state that makes the vehicle travel forward and a state that makes the vehicle travel in reverse, the method comprising:
capturing an image of a landscape in front of the vehicle and obtaining image data of the landscape; and
detecting a speed limit indicated on a traffic sign in the landscape based on the image data,
displaying the speed limit on the indicator when an operating state of the switching portion is the state that makes the vehicle travel forward, and
stopping the indicator from displaying the speed limit when the operating state of the switching portion is the state that makes the vehicle travel in reverse.

6. The speed limit display method according to claim 5, further comprising
storing the speed limit in a storage element, and
replacing, each time the speed limit is newly detected, the speed limit stored in the storage element with a newly detected speed limit and storing the newly detected speed limit in the storage element, and
displaying the speed limit stored in the storage element on the indicator when the speed limit is not newly detected while the operating state of the switching portion is the state that makes the vehicle travel in reverse, and the operating state of the switching portion is then switched from the state that makes the vehicle travel in reverse to the state that makes the vehicle travel forward.

7. The speed limit display method according to claim 6, further comprising
not displaying the speed limit stored in the storage element on the indicator, when the speed limit is newly detected while the operating state of the switching portion is the state that makes the vehicle travel in reverse, even when the operating state of the switching portion then switches from the state that makes the vehicle travel in reverse to the state that makes the vehicle travel forward.

8. The speed limit display method according to any one of claims 5 to 7, wherein
the indicator includes a first display portion for displaying information related to a speed limit indicated on a first traffic sign, and a second display portion for displaying information related to a speed limit indicated on a second traffic sign, the second traffic sign having a supplemental sign indicating a condition under which the speed limit indicated on the second traffic sign applies.
